# EUROPÄISCHE PATENTANMELDUNG

(11) **EP 1 213 400 A2**
(43) Veröffentlichungstag der Anmeldung: **12.06.2002**
(21) Anmeldenummer: 01128014.6
(22) Anmeldetag: 24.11.2001
(51) Int. Cl.: E04B 9/34, F24D 3/16

(54) **Deckenelement**

(30) Priorität: 06.12.2000 DE 10060971
(71) Anmelder: KAB Koch Deckensysteme GmbH & Co. KG, 42549 Velbert (DE)
(72) Erfinder: Schmitz, Klaus, 45481 Mühlheim-Ruhr (DE)
(74) Vertreter: Mentzel, Norbert, Dipl.-Phys.

(57) **Zusammenfassung**

Die Erfindung richtet sich auf ein Deckenelement für eine Kühldecke oder Kühlwand sowie Heizdecke oder Heizwand. Das Deckenelement besteht aus einer Anzahl parallel zueinander verlaufender U-förmiger Längslamellen (13), in denen ein mit Flüssigkeit beaufschlagter Schlauch (15) angeordnet ist und aus einer Anzahl parallel zueinander verlaufender Querlamellen (14), die senkrecht zu den Längslamellen (13) angeordnet sind. Die Lamellen (13, 14) münden in Sammlerprofilen (11), welche in Richtung Decke oder Wand geöffnet sind, (Fig. 2).

## Beschreibung

Die Erfindung richtet sich auf ein Deckenelement für eine Kühldecke oder Kühlwand sowie Heizdecke oder Heizwand, der im Oberbegriff des Anspruches 1 angegebenen Art.

Rasterartige Elemente für die Decke sind insbesondere aus der EP 0 198 983 A 2 und der DE-GM 7 413 652 bekannt. Diese Rasterelemente sind aus U-förmigen, senkrecht zueinander verlaufenden Lamellen aufgebaut. Solche gegenüber der Raumdecke abgehängten Decken erfüllen vor allem optische Zwecke und werden nicht für Kühldecken eingesetzt und besitzen daher auch keine entsprechenden Vorrichtungen.

Bekannt ist aus der DE 197 13 738 C1 ein gitterartiges Deckenelement als Kühleinrichtung, das aus einer ersten Schar von im Wesentlichen parallelen Längsflachstreifen und aus einer zweiten Schar senkrecht dazu verlaufender im Wesentlichen parallelen Querflachstreifen besteht. Die schleifenförmig verlegte Kühlleitung ist an den Kanten der Längsflachstreifen befestigt. Zur Befestigung der Kühlleitung an den oberen Enden der Längsflachstreifen ist ein Haltestreifen vorgesehen, der entweder angeschweißt oder als Strangpressprofil am Längsflachstreifen integriert ist, wobei er um die Leitung herumgebogen wird, um eine gute Wärmeleitung zu erreichen.

Eine solche Befestigung der Kühlleitung ist sehr aufwendig. Des Weiteren ist nachteilig, dass die Kühlleitung an der zur Raumdecke hin weisenden Seite des Deckenelements angeordnet ist und die Flachstreifen nur an ihren von dem zu kühlenden Raum wegweisenden Kanten berührt.

Die Aufgabe der vorliegenden Erfindung besteht daher darin, eine Decke oder Wand zur Wärmeübertragung zu schaffen, die einfacher und kostengünstiger herstellbar ist und eine verbesserte Kühl- oder Wärmeleistung besitzt, wobei die Elemente für Decke oder Wand aus rasterförmigen Elementen bestehen soll, die auch dekorativen Ansprüchen genügen.

Die Aufgabe wird erfindungsgemäß durch die Merkmale des Anspruchs 1 gelöst. Durch die in den Unteransprüchen aufgeführten Maßnahmen sind vorteilhafte Verbesserungen möglich.

Die Rasterelemente werden im folgenden für eine Kühldecke beschrieben. Ihr Aufbau und ihre Funktionweise ist auf die Anwendung als Kühlwände, Heizdecken oder Heizwände übertragbar.

Die verwendeten Rasterelemente bestehen aus ineinandergesteckten U-förmigen Längs- und Querlamellen, wobei die in einer Ebene angeordneten Stege der U-förmigen Lamellen die vom Raum aus sichtbare Rasterfläche bilden. Zur Leitung der Flüssigkeit sind Schläuche vorgesehen, vorzugsweise ein Kühlschlauch je Rasterelement bei einer Kühldecke. Der Schlauch wird in die Längslamellen eingelegt und durch die aufgesetzten Querlamellen festgelegt. Ein solches Rasterelement kann in einer gewünschten Größe vorgefertigt und in einen vorgesehenen Rahmen aus Sammlerprofilen einfach eingelegt werden, wobei sich die Enden der Lamellen, d.h. die äußeren Ränder des Rasterelementes auf Absätzen an den Sammlerprofilen abstützen können. Die aus den Längslamellen herausreichenden Schläuche werden durch Ausklinkungen an den Sammlerprofilen in das Innere der Sammlerprofile geführt, wo sie einerseits vom Raum aus nicht sichtbar sind und andererseits bis zu einem vorgesehenen Anschluss verlegt werden können.

Ein solches erfindungsgemäßes Deckenelement ist auf kostengünstige Weise erzielbar, da zur Montage der Einzelteile ausschließlich einfache Verfahrensschritte, wie Einlegen der Schläuche, Zusammenstecken der Lamellen zum Rasterelement und Einlegen des Rasterelements in den Sammlerprofil-Rahmen notwendig sind. Verwendet werden ausschließlich unkomplizierte Einzelteile. So sind Längs- und Querlamellen beides zur U-Form gebogene Blechstreifen. Sie unterscheiden sich erst nach dem die zum Zusammenstecken notwendigen Ausnehmungen eingebracht werden.

Des Weiteren ist bei der erfindungsgemäßen Vorrichtung vorteilhaft, dass einerseits eine Anordnung der Schläuche möglichst nah an dem zu kühlenden Raum verwirklicht wird und zum anderen die Schläuche durch das Verklemmen in der Längslamelle von drei Seiten der Längslamelle eingefasst werden und damit eine gute Wärmeleitung gegeben ist. Die U-Stege der Längslamellen grenzen an der Innenseite der Längslamellen an den Schlauch und berühren auf der anderen Seite, der Sichtseite des Rasterelements, die zu kühlende Raumluft. Die vom Schlauch auf die U-Stege der Längslamelle weitergeleitete "Wärme" führt zum Abkühlen der Längslamelle. Die Kühlung der Raumluft durch Abstrahlung von der Sichtseite erfolgt ohne großen Verlust, z.B. wie durch lange Wärmeleitungswege bei bekannten Vorrichtungen aus dem Stand der Technik.

Erfindungsgemäß wird des Weiteren von unten her gesehen eine dekorative Rasterstruktur gebildet, die durch Farbgestaltung der Lamellen optisch variierbar ist.

Die vorbeschriebene erfindungsgemäße Vorrichtung kann, wie oben erwähnt, auch als Heizdecke oder Heizwand eingesetzt werden. In diesem Fall wird eine warme Flüssigkeit oder Dampf durch die Schläuche geleitet.

Eine Ausführung der Erfindungen ist in den Zeichnungen dargestellt und in der nachfolgenden Beschreibung erläutert. Es zeigen:
- Fig. 1: eine Draufsicht auf ein Deckenelement von der Raumseite,
- Fig. 2: eine Draufsicht auf ein Deckenelement von der Deckenseite,
- Fig. 3: einen Schnitt A - A durch Fig. 2,
- Fig. 4: einen Schnitt B - B durch Fig. 2,
- Fig. 5: eine Seitenansicht des Sammlerprofils,
- Fig. 6: eine perspektivische Darstellung einer Längslamelle und
- Fig. 7: eine perspektivische Darstellung einer Querlamelle.

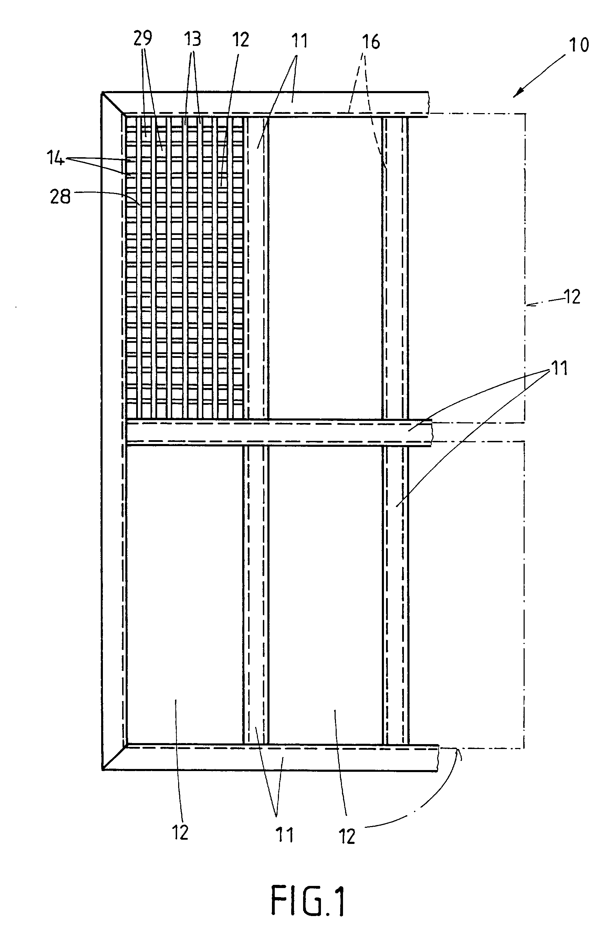

In Fig. 1 ist ein erfindungsgemäßen Deckenelement 10 für eine Kühldecke von der Raumseite aus andeutungsweise gezeigt. Das Deckenelement 10 besteht aus zu einem Rahmen zusammengefügten Sammlerprofilen 11 und zwischen diesen Sammlerprofilen 11 angeordneten Rasterelementen 12. Ein Rasterelement 12 ist in Gänze gezeigt. Man erkennt die parallel angeordneten Längslamellen 13 und die ebenso parallel angeordneten Querlamellen 14, die sich an den Stellen 28 kreuzen und das gitterartige Rasterelement 12 bilden. Die Maschengröße eines solchen Gitters, d.h. die Größe der Zwischenräume 29 ist abhängig von der Anzahl und Breite der Lamellen sowie von der Anzahl der Kreuzungsstellen 28.

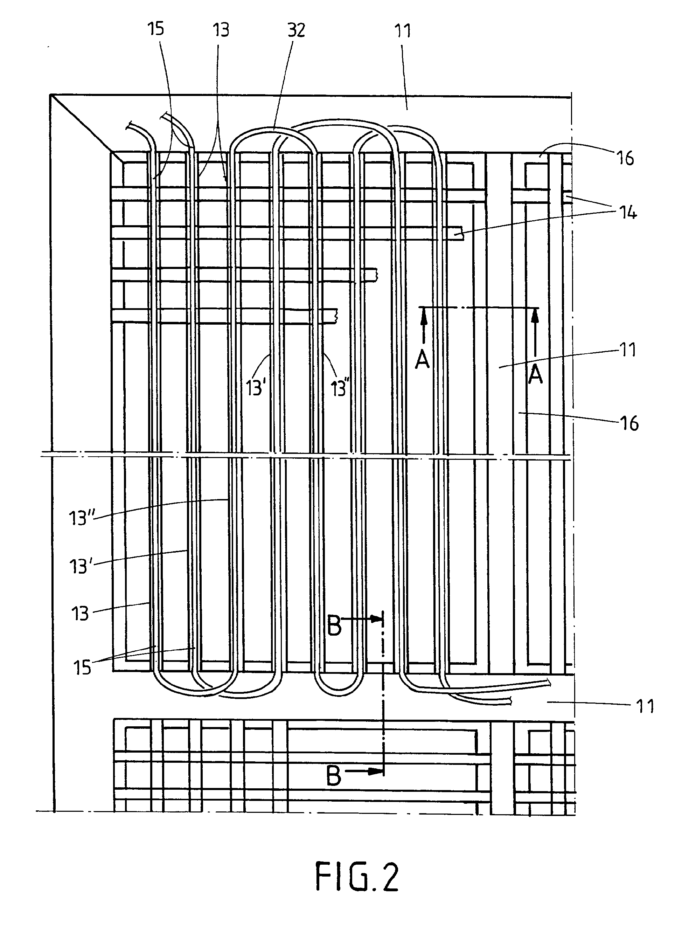

In Fig. 2 ist ein solches Deckenelement 10 von der Raumdecke aus gezeigt. Für ein Rasterelement 12 sind die Längslamellen 13 dargestellt. Die Querlamellen 14 sind nur bereichsweise angedeutet. Beide Lamellen 13, 14 liegen auf den Sammlerprofilen 11 auf. Dies wird durch Absätze 16 an den Sammlerprofilen 11 möglich. Die zur Leitung der Kühlflüssigkeit vorgesehenen Schläuche 15 sind schleifenförmig in die Längslamellen eingelegt. Handelt es sich bei dem Kühlschlauch 15 um einen relativ elastischen Kunststoffschlauch und/oder ist ein relativ großmaschiges Gitter für das Rasterelement 12 gewählt, so ist es möglich den Schlauch 15 so in das Rasterelement einzulegen, dass der Schlauch 15 von einer Längslamelle 13 nach Umbiegung in umgekehrter Richtung in die benachbarte Längslamelle 13' und von dort nach Umbiegung in die nächst benachbarte Längslamelle 13" geführt wird. Handelt es sich jedoch bei dem Schlauch 15 um einen weniger flexiblen Schlauch oder ist der Abstand der parallelen Längslamellen 13 relativ klein, so ist es vorteilhafter den Schlauch 15 der aus der Längslamelle 13 herausreicht, nach seiner Kühlschlauchbiegung 32 nicht in die benachbarte Längslamelle 13' zu führen, sondern in die nächste Längslamelle 13". Ebenso denkbar ist eine Konstruktion, wo mehr als eine Längslamelle ausgelassen wird. In Fig. 2 sind verschiedene Einfädelungen für die Kühlschläuche 15 beispielsweise gezeigt. Besonders bevorzugt wird folgende Einfädelung des Schlauchs 15. Ausgehend von beispielsweise einem Rasterelement 12 mit neun Längslamellen 13 wird der Schlauch zuerst in die erste Längslamelle 13 eingelegt, von dort in die sechste Lamelle 13 geführt, dann zurück in die zweite, von dort in die siebente, dann in die dritte, von dort in die achte, zurück in die vierte, dann in die neunte und schließlich zuletzt in die fünfte Längslamelle 13.

Der Schlauch 15 kann aus Kunststoff oder Metall bestehen und ist für eine bessere Abstrahlung vorzugsweise dunkel gefärbt.

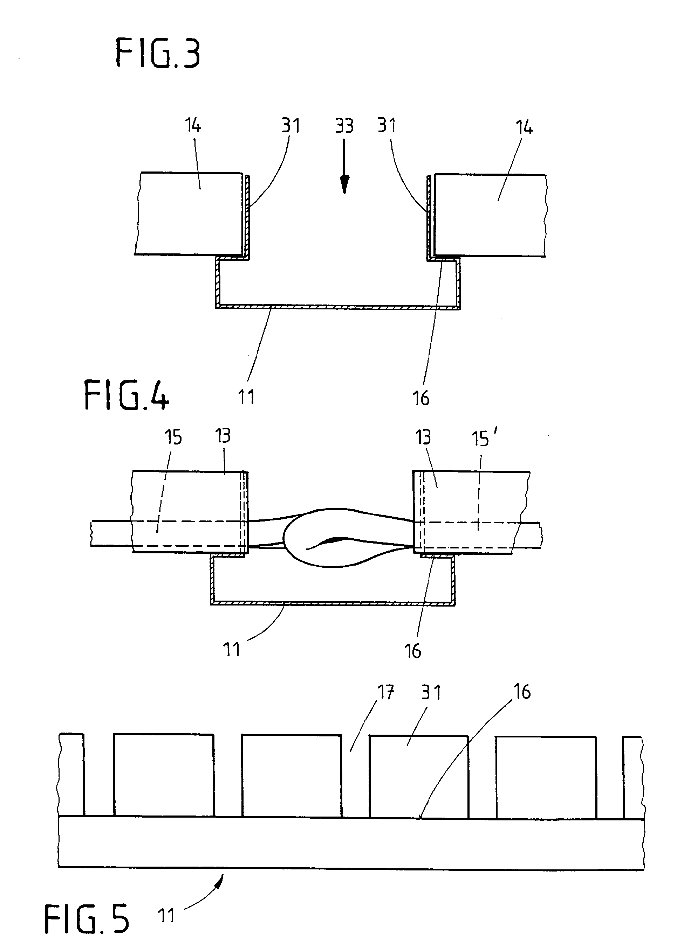

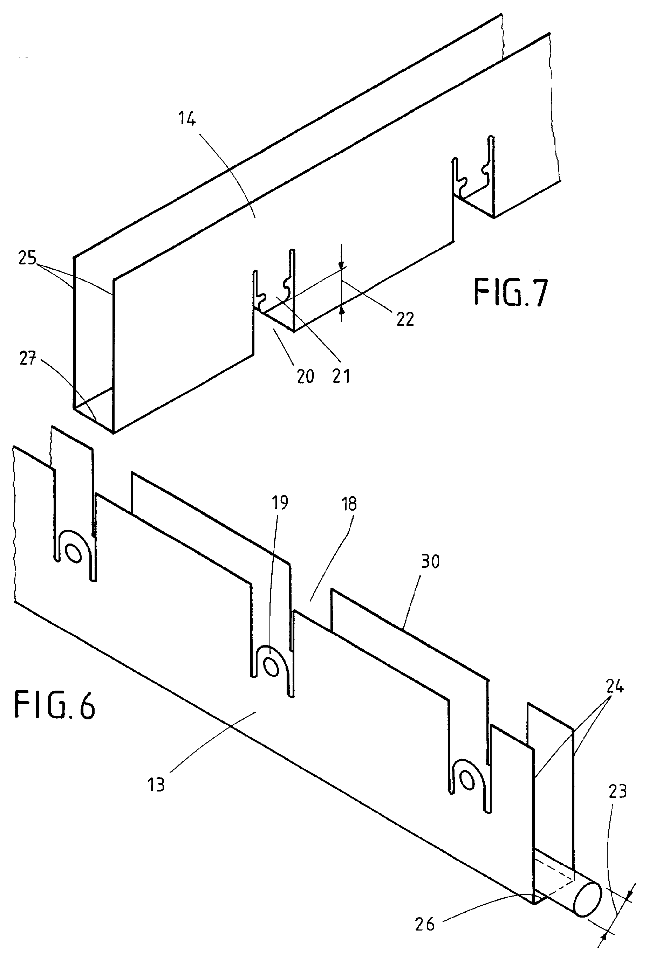

Die schleifenförmig verlegten Schläuche 15 reichen in den Innenraum der Sammlerprofile 11, wo genügend Platz zur Aufnahme der Kühlschlauchbiegung 32 vorhanden ist. Insbesondere in Fig. 4 und 5 gezeigt, sind zu diesem Zweck an den Schenkeln 31 der Sammlerprofile 11 Ausklinkungen 17 angebracht, die bis zu den Absätzen 16 reichen. Die Ausklinkungen 17 sind vorzugsweise so breit, dass zwar die Schläuche 15 durch die Ausklinkungen 17 geführt werden können, aber nicht die Lamellen 13, 14. Dies ist in Fig. 3 dargestellt. Die Querlamellen 14, ebenso natürlich die nicht gezeigten Längslamellen 13, liegen auf den Absätzen 16 des podestartig geformten Sammlerprofils 11 auf und reichen bis an den Schenkel 31 heran. Es ist jedoch auch eine Ausführung denkbar, wo die Lamellen 13, 14 durch die Ausklinkung 17 der Sammlerprofile 11 hindurchreichen, gezeigt in Fig. 4. Diese Ausführung wird insbesondere dann Anwendung finden, wenn ein einfaches Auflegen der Lamellen 13, 14 auf den Sammlerprofilen 11 nicht ausreicht, d.h. eine weitere Festlegung gewünscht ist, die durch ein Verklemmen der Lamellen 13, 14 in den Ausklinkungen 17 bzw. durch ein Hintergreifen der Ausklinkungen 17 seitens der Lamellen 13, 14 erzielbar ist.

Aus den Fig. 3 und 4 wird der podestartige Querschnitt der Sammlerprofile 11 deutlich. Die Sammlerprofile 11 bieten in ihrem Profilinnenraum ausreichend Platz für die Schläuche 15. Nach oben zur Raumdecke hin sind die Sammlerprofile 11 geöffnet. In oder an den Sammlerprofilen 11 werden die Befestigungen des Deckenelementes 10 mit der Raumdecke angeordnet. Dazu können die Befestigungselemente in die Öffnung 13 eingeführt werden, die beispielsweise die Absätze 16 im Profilinnenraum hintergreifen. Andererseits sind natürlich auch Schraub- oder ähnliche Verbindungen zwischen Sammlerprofilen 11 und Decke möglich.

In den Fig. 3 und 4 sind jeweils Sammlerprofile 11 gezeigt, wo beidseitig Lamellen 13 oder 14 aufgelegt werden, d.h. auf der einen Seite eine Längslamelle 13 mit Schlauch 15 vom ersten Rasterelement 12 und auf der anderen Seite eine Längslamelle 13 mit einem weiteren Schlauch 15' vom nächsten Rasterelement. Die den äußeren Rand des Deckenelements 10 bildenden Sammlerprofile 11 nehmen dagegen nur von einer Seite Lamellen 13 oder 14 auf, d.h. benötigen auch nur einen Absatz 16. Der zur Raumwand gerichtete Schenkel 31 des Sammlerprofils 11 kann in diesem Fall auch ohne einen Absatz 16 vorgesehen werden.

Bisher wurde das Rasterelement 12 als Einheit beschrieben. Dieses Rasterelement 12 ist auf einfache Weise herstellbar. Dazu betrachtet man am besten Fig. 6 und 7, wo zum einen eine U-förmige Längslamelle 13 und zum anderen eine U-förmige Querlamelle 14 abgebildet sind. Zur Herstellung des Rasterelements 12 werden die Längslamellen 13 in gewünschter Anzahl parallel angeordnet und ausgerichtet. In die Längslamellen 13 wird mindestens ein Schlauch 15 schleifenförmig eingelegt. Anschließend werden die Querlamellen 14 von oben her auf die Längslamellen 19 aufgedrückt, bis die U-Stege 26 der Längslamellen 13 und die U-Stege 27 der Querlamellen 14 fluchten. Dies wird durch eine entsprechende Ausgestaltung der Lamellen 13, 14 möglich. Die Längslamellen 13 besitzen an ihren U-Schenkeln 24 mehrere von den Schenkelenden 30 ausgehende Ausnehmungen 18. Die Abstände der Ausnehmungen 18 an den U-Schenkeln 24 entsprechen den Abständen der Kreuzungsstellen 28. Innerhalb der Ausnehmungen 18 ist jeweils ein Klemmlappen 19 vom Schenkel 24 verblieben, der die Ausnehmungen 18 in der Breite bis auf zwei Schlitze ausfüllt. Diese Schlitze müssen mindestens so breit sein, um die Stege 25 der Querlamellen 13 aufzunehmen. Oberhalb der Klemmlappen 19 ist in der Ausnehmung 18 ein Freiraum zur Aufnahme der Querlamellen 13. Die Klemmlappen 19 unterstützen ein Verklemmen der Querlamellen 14.

Die Querlamellen 14, dargestellt in Fig. 7, besitzen ebenfalls in Abständen mehrere Ausnehmungen 20 an den U-Schenkeln 25. Diese Ausnehmungen 20 sind jedoch in Richtung des U-Stegs 27 geöffnet. Innerhalb der Ausnehmung 20 ist je ein Stützlappen 21 vorgesehen. Diese Stützlappen 21 unterstützen beim Zusammensetzen von Längs- und Querlamellen ein Verklemmen beider Lamellen 13, 14 und bewirken zusätzlich, dass der in den Längslamellen 13 eingelegte Schlauch 15 festgelegt wird. Dazu sollte die Höhe des Freiraums 22 oberhalb des Stützlappens 21 mit dem Durchmesser 23 des Kühlschlauchs 15 übereinstimmen.

Die Abstände der Ausnehmungen 20 an den Querlamellen 14 können den Abständen der Ausnehmungen 18 an den Längslamellen 13 entsprechen. Es ergeben sich dann quadratische Zwischenräume 29. Die Abstände können jedoch auch anders gewählt werden. Auf diese Weise hergestellte Rasterelemente 12 sind in beliebiger, gewünschter Anzahl in einem Rahmen aus Sammlerprofilen 11 einsetzbar, um eine Kühldecke zu bilden.

Ebenso ist die Herstellung einer Kühlwand bzw. einer Heizdecke oder Heizwand denkbar.

### Bezugszeichenliste:

- 10: Deckenelement
- 11: Sammlerprofil
- 12: Rasterelement
- 13: Längslamelle
- 13': Längslamelle
- 13": Längslamelle
- 14: Querlamelle
- 15: Schlauch
- 15': Schlauch
- 16: Absatz an 11
- 17: Ausklinkung in 11
- 18: Ausnehmung in 13
- 19: Klemmlappen an 13
- 20: Ausnehmung in 14
- 21: Stützlappen an 14
- 22: Freiraumhöhe
- 23: Schlauchdurchmesser
- 24: U-Schenkel von 13
- 25: U-Schenkel von 14
- 26: U-Steg von 13
- 27: U-Steg von 14
- 28: Kreuzungsstelle
- 29: Zwischenräume
- 30: Schenkelende
- 31: Schenkel an 11
- 32: Schlauchbiegung
- 33: Öffnung

## Patentansprüche

1. Deckenelement für eine Kühldecke oder Kühlwand sowie Heizdecke oder Heizwand mit wenigstens einem Rasterelement (12), bestehend aus einer Anzahl parallel zueinander verlaufender U-förmiger Längslamellen (13),
einer Anzahl parallel zueinander verlaufender Querlamellen (14),
wobei die Längs- und Querlamellen (13, 14) senkrecht zueinander angeordnet sind, gemeinsame Kreuzungsstellen (28) besitzen und Ausnehmungen (18, 20) in ihren U-Schenkeln (24, 25) an den vorgesehenen Kreuzungsstellen (28) aufweisen, so daß ihre U-Stege (26, 27) im verbundenen Zustand der Lamellen (13, 14) miteinander fluchten,
sowie ein mit Flüssigkeit beaufschlagter Schlauch (15), wobei dieser Schlauch (15) in den Längslamellen (13) angeordnet ist,
**dadurch gekennzeichnet, daß**
die Lamellen (13, 14) des Rasterelements (12) in Sammlerprofilen (11) münden, wobei die Sammlerprofile (11) in Richtung Decke oder Wand geöffnet sind.

2. Deckenelement nach Anspruch 1, **dadurch gekennzeichnet, daß** die Sammlerprofile (11) einen podestartigen Querschnitt besitzen, wobei die obere Podestfläche (33) geöffnet ist und die Absätze (16) eine Auflagefläche für Lamellen (13, 14) bilden.

3. Deckenelement nach den Ansprüchen 1 bis 2, **dadurch gekennzeichnet, daß** die Sammlerprofile (11) an ihren Schenkeln (31) in regelmäßigen Abständen bis zu den Absätzen (16) reichende Ausklinkungen (17) zum Durchtritt der aus den Längslamellen (13) herausreichenden Schläuche (15) besitzen.

4. Deckenelement nach Anspruch 3, **dadurch gekennzeichnet, daß** sich innerhalb des Sammlerprofils (11) zwischen zwei benachbarten Ausklinkungen (17) die Biegung eines Schlauchs (15) befindet, wobei der Schlauch (15) aus einer Längslamelle (13) herausreicht und in die benachbarte Längslamelle (13') hineinführt.

5. Deckenelement nach Anspruch 3, **dadurch gekennzeichnet, daß** sich innerhalb des Sammlerprofils (11) zwischen zwei nicht benachbarten Ausklinkungen (17) die Biegung eines Schlauchs (15) befindet, wobei der Schlauch (15) aus einer Längslamelle (13) herausreicht und in eine Längslamelle (13") hineinführt, wobei zwischen beiden Längslamellen (13, 13") mindestens eine weitere Längslamelle (13') angeordnet ist.
